Europäisches Patentamt

(19) European Patent Office

Office européen des brevets

(11) Publication number: **0 059 587**
**B1**

## (12) EUROPEAN PATENT SPECIFICATION

(45) Date of publication of patent specification: **11.05.88**

(51) Int. Cl.⁴: **F 02 D 41/40**

(21) Application number: **82300908.9**

(22) Date of filing: **23.02.82**

(54) **Fuel pump control system.**

(30) Priority: **03.03.81 PCt/us81/00267**

(43) Date of publication of application:
**08.09.82 Bulletin 82/36**

(45) Publication of the grant of the patent:
**11.05.88 Bulletin 88/19**

(84) Designated Contracting States:
**BE DE FR GB**

(56) References cited:
**DE-A-2 710 614**
**GB-A-1 413 099**
**GB-A-2 031 550**
**US-A-3 757 167**
**US-A-4 179 922**
**US-A-4 188 820**

**PATENT ABSTRACTS OF JAPAN, vol. 4, no. 47**
**(P-6)529), April 11, 1980**
**W. Kaspers & H.-J. Küfner, "Messen Steuern**
**Regeln", 2. Auflage 1980, Friedr. Vieweg &**
**Sohn, Braunschweig, pages 29-34**

(73) Proprietor: **CATERPILLAR INC.**
**100 Northeast Adams Street**
**Peoria Illinois 61629-6490 (US)**

(72) Inventor: **Szentes, John F.**
**2715 West Overhill Road**
**Peoria Illinois 61614 (US)**

(74) Representative: **Brunner, Michael John et al**
**GILL JENNINGS & EVERY 53-64 Chancery Lane**
**London WC2A 1HN (GB)**

Courier Press, Leamington Spa, England.

EP 0 059 587 B1

## Description

This invention relates to a fuel pump control system for an internal combustion engine and to the measurement of the angular rotation of shafts in such systems, for determining the amount of rotation of a shaft from a fixed reference point or the phase shift between two shafts rotating at the same average speed.

Basic control of the operation of an internal combustion engine is accomplished by varying the amount of fuel delivered to the engine cylinders by the fuel pump and by controlling the time that the fuel in the cylinders ignites as the pistons each approach top dead center on the compression stroke. In general, the amount of fuel delivered to the cylinders will control the speed of the engine while the timing of ignition will control the efficiency of fuel combustion.

In a typical four-stroke-cycle diesel engine, a timing shaft will be gear driven by the engine crank shaft at half engine speed, with the timing shaft being coupled to the fuel camshaft of a fuel pump by a timing mechanism so that the fuel pump will deliver fuel individually to half of the engine cylinders during one engine revolution and to the other half of the cylinders in the next engine revolution. A controllable and movable fuel rack will vary the amount of fuel that the fuel pump delivers to the cylinders and the timing mechanism will vary the angular phase relationship between the timing shaft and the fuel camshaft so that fuel is injected into the cylinders at the proper time in engine operation relative to the pistons reaching top dead center in their compression strokes.

In order to provide an electronic engine control system which will function to maintain engine performance at maximum efficiency under varying operating conditions, it is necessary to obtain, repeatedly and rapidly, precise information as to the engine speed, magnitude of the timing advance angle, and the position of the fuel rack.

There are a number of problems involved in obtaining the desired information.

First of all, the apparatus should have a life which meets or exceeds engine overhaul time to prevent premature failure and loss of control during engine operation. To meet this requirement, the components utilized for detection of speed and angular displacement should be simple, rugged and non-contacting.

The provision of separate sensing systems for each particular function that is being monitored increases the cost of an overall control system. To this problem, the functions of the sensing systems should be correlated so that the desired information as to the various functions is obtained with the least number of sensor devices.

Sensing systems which provide analog information as to the function being monitored are often inaccurate since age and varying temperature condition will often cause component values to change. To overcome this problem, it is desirable to provide a system in which digital information of the monitored conditions is obtained.

GB—A—1413099 shows a timing system having first and second rotatable shafts; timing means for rotatably driving one of the shafts from the other and for varying the angular relationship between the shafts; one first tooth rotatable at a speed proportional to the speed of the first shaft and movable through a first circular path; a first signal generator means for generating a first signal in response to movement of the first tooth past a predetermined point in the first circular path; at least one second tooth rotatable at a speed proportional to the speed of the second shaft and movable through a second circular path; and a second signal generator means for generating a second signal in response to movement of the second tooth past a predetermined point in the second circular path.

Timing arrangements which comprise clock means for generating a series of clock pulses, and counting means for counting the number of clock pulses occurring in the interval beginning with a signal from one of a pair of generator means and ending with the next succeeding signal from the other signal generator means are known from Kasper & Kufner, "Messen Steuern Regeln", 2 Auflage, 1980, Friedr. Vieweg & Sohn, Braunschweig, pages 29—34 and US—A—4188820.

GB—A—2031550 discloses a system having a timing arrangement in which the position of a fuel rack is sensed and used in a feedback loop.

It is desirable to be able to control the fuel pump accurately to meet the various engine conditions that exist at any moment.

According to the present invention there is provided a fuel pump control system for an internal combustion engine which includes an engine driven crankshaft; a first gear fixed to a first shaft; a second gear fixed to the crankshaft and meshed with the first gear; and a fuel pump for delivering fuel to the engine; the control system including timing means for rotatably driving a second shaft from the first shaft, the second shaft driving the fuel pump, and for varying the angular relationship between the shafts, one or more first sensible members rotatable at a speed proportional to the speed of the first shaft and movable through a first circular path; a first non-contacting digital type signal generator means for generating a first signal in response to movement of the or each first sensible member past a first predetermined point in the first circular path; one or more second sensible members rotatable at a speed proportional to the speed of the second shaft and movable through a second circular path; a second non-contacting digital type signal generator means for generating a second signal in response to movement of the or each second sensible member past a second predetermined point in

the second circular path; clock means for generating a series of clock pulses; counting means for counting the number of clock pulses occurring in the interval beginning with a signal from one of the signal generator means and ending with the next succeeding signal from the other signal generator means, the counting means providing a digital signal proportional to the magnitude of the timing advance angle; characterized by a third shaft movable through a limited range of movement to control the amount of fuel flow through the fuel pump; a third non-contacting digital type signal generator means for generating a third signal in response to movement of the second sensible member past a determinable point in the second circular path; means for shifting the determinable point around the second circular path in response to, and through a distance proportional to, movement of the third shaft; and counting means for counting the number of clock pulses occurring in the interval beginning with a signal from the second non-contacting digital type signal generator means and ending with the next succeeding signal from the third non-contacting digital type signal generator means the counting means providing a digital signal proportional to the amount that the fuel rack has been shifted.

The present invention can thus use three non-contacting digital-type sensors to derive information on engine speed, timing angle, and quantity of fuel injected. Deriving all of this information from a common group of only three purely digital sensors is not shown in the art and has advantages of reliability, accuracy, life, and cost.

Preferably, the sensible members are magnetically sensible and the non-contacting digital type signal generators include magnet sensors.

One example of a system constructed in accordance with the present invention will now be described with reference to the accompanying drawings in which:—

Figure 1 is a generally schematic illustration of an engine and fuel pump system utilizing the sensor arrangement of the present invention;

Figure 2 is an end elevational view, partly in section, of the drum and magnetic sensors used in the sensor arrangement of Figure 1;

Figure 3 is a timing shaft of the sensor signals produced by the sensor arrangement of Figure 1; and

Figure 4 is a block diagram of the data processor of Figure 1.

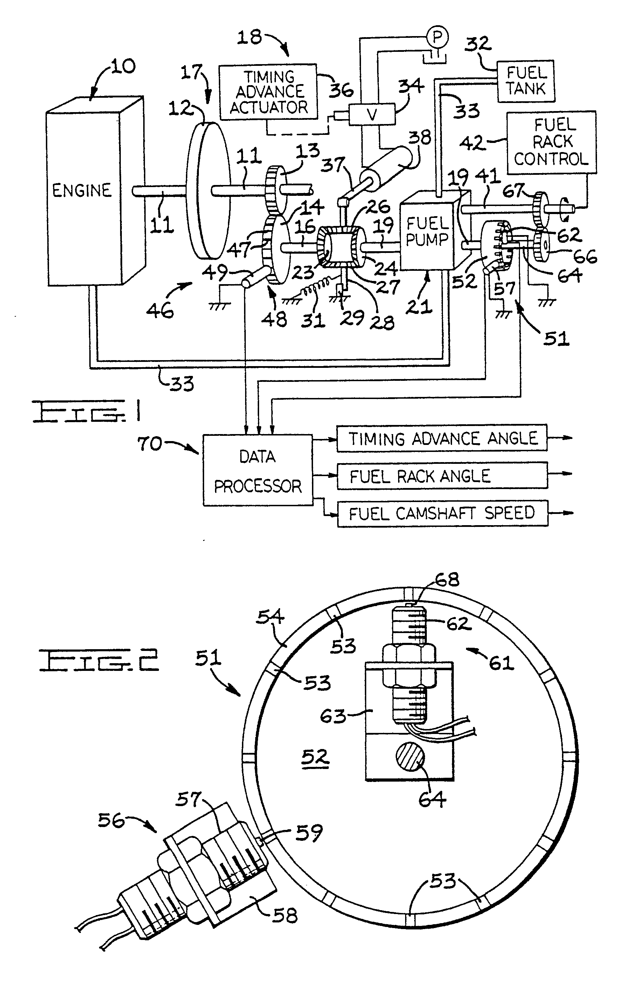

Referring now to the drawings, wherein a preferred embodiment of the invention is shown, Fig. 1 illustrates schematically an internal combustion engine 10, such as a four-stroke-cycle diesel engine, the engine having a crank shaft 11 to which is fixed flywheel 12. Meshed gears 13 and 14, on crank shaft 11 and timing shaft 16 respectively, are provided to transmit engine rotation to the timing shaft. Engine 10, crank shaft 11 and gears 13 and 14 thus constitute a drive means 17 for driving timing shaft 16 at a rotational speed directly proportional to the engine speed, the constant of proportionality being dependent on the gear ratio of gears 13 and 14. Typically, the gear ratio is such that the timing shaft 16 is driven at half-engine-speed.

A timing means 18 is provided to rotatively drive fuel camshaft 19 of fuel pump 21 by timing shaft 16 and to vary, within a predetermined range, the angular relationship between the timing shaft 16 and fuel camshaft 19. As illustrated in Fig. 1, timing means 18 may comprise bevel gears 23 and 24 fixed to timing shaft 16 and fuel camshaft 19, respectively, with the drive of gear 23 being transmitted to gear 24 by bevel gears 26 and 27 which are each meshed with gears 23 and 24 and are rotatable on spindle 28. Spindle 28 is biased towards a zero reference fixed stop 29 by spring 31. The timing means is initially bench-set so that when the spindle 28 rests against stop 29, the fuel camshaft 19 will cause the fuel pump 21 to deliver fuel from fuel tank 32 and fuel line 33 to the cylinders of engine 10 at a minimum advance (typically 14°) before top dead center of the engine pistons. Alternatively, a standard differential or other means for varying the angular relationship between the two shafts 16 and 19 may also be used.

The timing means 18 will cause the timing advance angle of fuel delivery to be set at a desired value greater than minimum during operation of the engine, as by actuation of hydraulic valve 34 in response to timing advance actuator 36, so that piston 37 of hydraulic cylinder 38 will extend or retract and cause gear spindle 28 to move to a desired position relative to stop 29. At such desired position gears 26 and 27 will cause fuel camshaft 19 to be driven at the same speed as that of timing shaft 16, but the angular relationship of the two shafts 16 and 19 will have increased from the minimum advance relationship.

Fuel pump 21 has a movable fuel rack shaft 41, controlled by fuel rack actuator 42, to control the amount of fuel flow through the fuel pump. In a scroll type fuel pump, shaft 41 is rotatable through a limited distance between minimum and maximum reference points, with the amount of fuel delivered by the fuel pump being determined by the position to which shaft 41 is moved.

A first rotation responsive means 46 is provided for generating a signal each time that the engine 10 has rotated through a particular angle. In this case, the gear 14, of ferromagnetic material, constitutes a member fixed to and extending outwardly from the timing shaft 16, and the teeth 47 of the gear 14 constitute surface irregularities on the gear which function as magnetically sensible members and which travel in a circular path around the axis of the timing shaft 16. Of course, an additional disc (not shown) axled on the timing shaft 16 and being supplied with surface irregularities could be used for measuring the rotational velocity of the shaft 16. The rotation responsive means 46 also includes a first signal generator means 48 for generating a first signal in response to movement of the gear teeth 47 past a predetermined point in their path of movement. In particular, the first signal generator means 48 includes a magnetic sensor 49 disposed in closely spaced relation adjacent to the path of the gear teeth 47, the sensor 48 being fixed relative to the engine so that it is at a fixed, or predetermined, point relative to the path of movement of the gear teeth. In the illustrated embodiment, gear 14 has 48 teeth, and thus 48 signals will be generated for each full revolution of the timing shaft 16. Put otherwise, a new signal will be generated for each 7.5° of rotation of the timing shaft 16, or for each 15° of rotation of the engine crank shaft 11.

A second rotation responsive means 51 is provided in conjunction with the fuel camshaft 19 which will also function to generate a signal each time engine 10 has rotated through a particular angle. In this instance, the rotation responsive means 51 includes a ferromagnetic drum 52 fixed to and extending outwardly from the fuel camshaft 19, the drum 52 having a plurality of equidistantly spaced slots 53 around the periphery 54 thereof. Slots 53 again comprise surface irregularities of the drum and serve as magnetically sensible members which move in a circular path around the axis of the fuel camshaft 19. A second signal generator means 56 functions to generate a signal in response to movement of slots 53 past a predetermined point in their path of movement, the signal generator means 56 including a magnetic sensor 57 mounted, as by bracket 58, in fixed relation to fuel pump 21, so that the magnetic pickup head 59 is closely spaced to the path of movement of the slotted periphery of drum 52. The location of the pickup head 59 constitutes a fixed or predetermined point in the path of circular movement of drum slots 53. In the particular embodiment herein illustrated, drum 52 has 12 slots, and thus twelve signals will be generated for one full revolution of the fuel camshaft. This corresponds to 30° of fuel camshaft rotation, or, 60° of engine rotation.

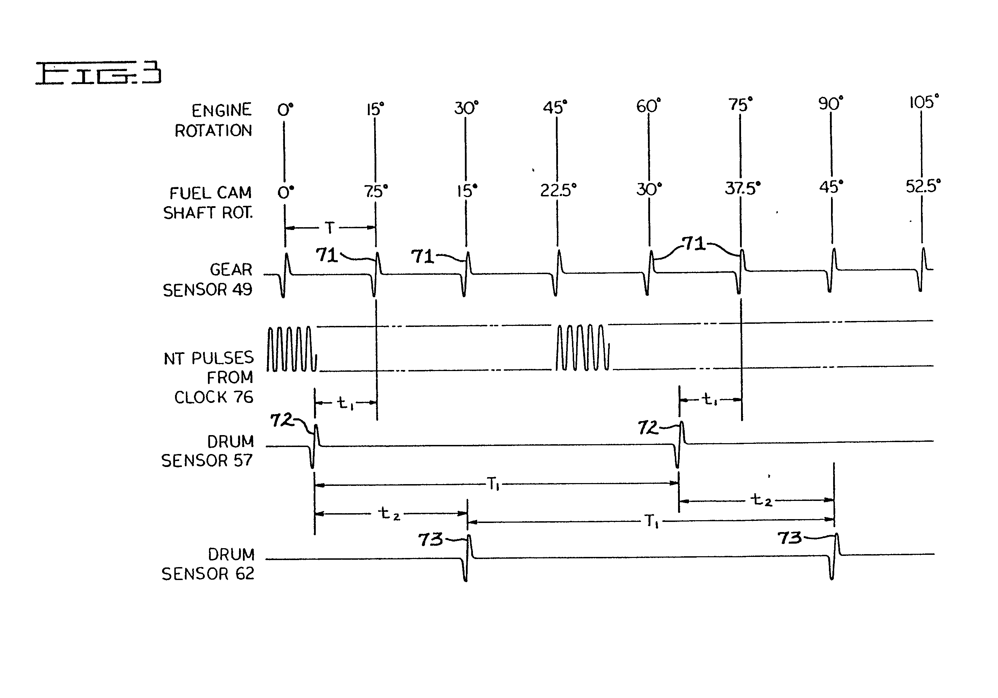

A third signal generator means 61 (Figure 2) is provided for generating a signal in response to movement of the slotted periphery of drum 52 past a determinable point in the path of movement of drum slots 53, and includes a magnetic sensor 62 mounted on bracket 63 which is fixed to shaft 64, the latter being co-axial to the fuel camshaft 19.

Meshed gears 66 and 67, fixed to shaft 64 and the fuel rack 41, function to move magnetic sensor 62 around the axis of shaft 64 in an amount proportional to rotational movement of the fuel rack 41, so that the magnetic pickup head 68 is moved to a point adjacent the slotted drum which is determined by the position of the fuel rack 41. The location of pickup head 68 constitutes a determinable point along the path of circular movement of drum slots 53.

The signals from the first 49, and second 57 and third sensor 62 are sent to the data processor 70 wherein digital signals are generated which are proportional to the magnitude of timing advance angle, fuel rack angle (and thus the amount of fuel being pumped) and fuel camshaft speed. These signals may then be used in an overall engine control system (not shown).

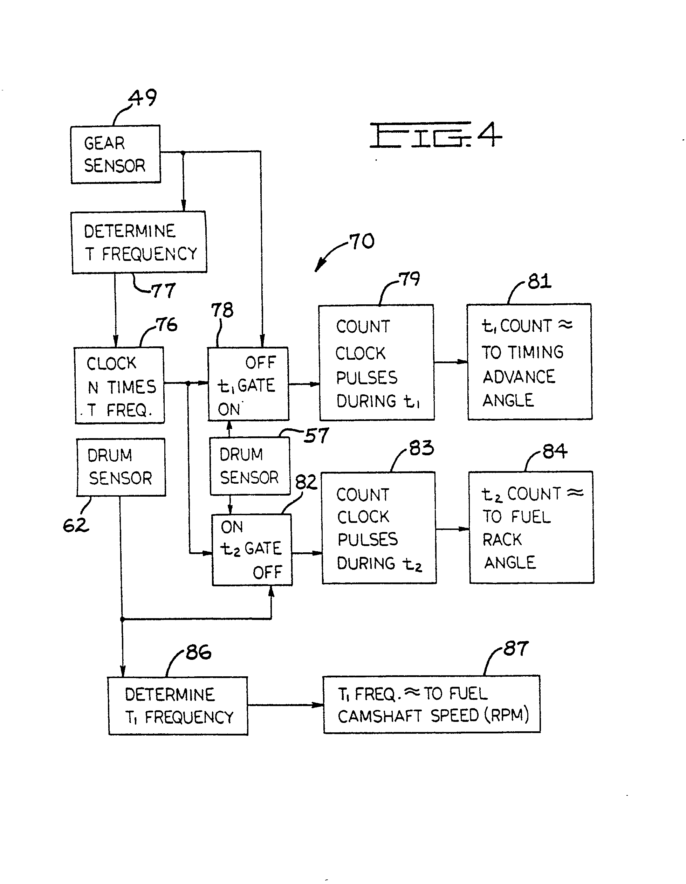

The time relation of the signals generated by the various sensors is illustrated in Figure 3. The gear sensor 49 of the first signal generator means 48 will produce a first signal 71 in response to each 15° of engine revolution. The time T between each consecutive first signal 71 will be dependent upon, and inversely proportional to, the engine speed. The drum sensor 57 of the second signal generator 56 will produce a second signal 72 in response to each 60° of rotation of the engine. The time $T_1$ between successive second signals 72 will be inversely proportional to the speed of the fuel camshaft, and thus also inversely proportional to engine speed. The time $t_1$ between a second signal 72 and the next successive first signal 71 is proportional to the magnitude of the timing advance angle, since the more that the timing means 18 advances the fuel camshaft 17 relative to the timing shaft 16, the greater the length of time that it will take for a first signal 71 to be generated after generation of a second signal 72. The time $t_1$ for any given timing advance angle is also inversely proportional to engine speed, but the data processor 70 functions to give a timing advance angle signal which is independent of engine speed.

The drum sensor 62 of the third signal generator means 61 generates third signals 73 at the same frequency as the second signals 72. The time $t_2$ between a second signal 72 and the next successive third signal 73 is a function of the position of the drum sensors 57 and 62 relative to each other. As is apparent, with a fixed sensor 57 and a 12-slot drum, the movable drum sensor can be varied through 30° with a corresponding variance in the time $t_2$. The gear ratio of gears 66 and 67 should accordingly be chosen so that full movement of the fuel rack 41 between its extreme position will produce less than 30° of movement of drum sensor 62 between its extreme positions.

The data processor 70 as shown in Fig. 4 includes a clock means 76 for generating a series of high frequency pulses at a frequency proportional to engine speed. For example, the first signals 71 can be applied to a frequency determinator 77 and the signal therefrom, proportional to engine speed, can then be multiplied by a high magnitude constant N in the clock means 76 to generate the clock pulses.

Each time that the drum sensor 57 generates a second signal it is applied to the $t_1$ gate 78 to close the gate for passage of clock pulses therethrough. The first signals 71 of the gear sensor 49 are applied to the $t_1$ gate 78 and the first signal 71 occurring after a second signal 72 will open the $t_1$ gate. The clock pulses occurring during the time the $t_1$ gate is closed are passed to and counted by the $t_1$ counter 79. After the count is complete, it is transferred to latch 81 and counter 79 is reset, awaiting the next closing of the $t_1$ gate 78 by the next occurring signal 72 from drum sensor 57. The latched count in latch 81 provides a digital signal proportional to the magnitude of the timing advance angle which may be used in an engine control system. Since the clock frequency is proportional to the engine speed, and since the time $t_1$ is inversely proportional to the engine speed, the number of clock pulses counted, for any given timing advance angle, will be the same for varying engine speeds. Thus, the $t_1$ count will vary only if the timing advance angle is changed.

Each second signal 72 is also applied to the $t_2$ gate 82 to close the gate for passage of clock pulses therethrough, the $t_2$ gate 82 being opened by the next third signal 73 from the drum sensor 62. The clock pulses occurring during the $t_2$ time period are then counted by the $t_2$ counter 83, and transferred to latch 84 after the count is complete, to provide a digital signal proportional to the amount that the drum sensor 62 has been shifted in response to movement of the fuel rack 41. Again, since the length of time $t_2$ will vary inversely with engine speed, the number of clock pulses occurring during the time the $t_2$ gate is closed is independent of engine speed and will change only if the position of the drum sensor 62 is changed.

Since a new $t_1$ count and a new $t_2$ count is obtained in response to each generation of a second signal 72, new signals as to the timing advance angle and first rack position are generated for each 60° of engine rotation.

The third signals 73 from the drum sensor 62 can also be applied to frequency determinator 86 which generates a signal inversely proportional to the time period between successive signals 73. The generated signal is thus proportional to the fuel camshaft speed and sent to latch 87 for use in a control system as desired.

The described system is particularly useful as part of an overall engine control system wherein quickly updated digital information, obtained many times during a single engine revolution, is required as to the magnitude of timing angle advance, the magnitude of fuel rack movement, and the fuel camshaft speed.

Although the fuel pump 21 is illustrated herein as one having a scrolled-plunger operation with a rotatable fuel rack 41, the invention is also applicable to sleeve-metering fuel pumps having a reciprocating fuel rack shaft. In such case, suitable mechanism, such as a rack and pinion connection, can be used to convert linear motion of the shaft to rotary movement of the drum sensor 62 so that the drum sensor will be moved along the path of movement of the drum slots 53 in an amount proportional to rack movement.

The illustrated system may also be modified by use of a flip-flop, or similar device, so that operative first signals 71 will be generated in response to passage of every other tooth or gear 14 past the gear sensor 49. This will cause the first signal 71 to be generated for each 30° of engine rotation, and will enable the system to measure timing advance angles of up to 30°.

In the particular system shown, the sensible members, i.e. gear teeth 47, are fixed to the timing shaft 16 and rotate therewith at the rotational speed of the timing shaft 16. However, since the timing shaft is gear driven by the engine crank shaft 11, it would be possible to use similar sensible members on the crank shaft. For example, the illustrated gear sensor 49 could be located to sense passage of the gear teeth on crank shaft gear 13. If such gear had 24 gear teeth, and since the gear teeth or gear 13 have a rotational speed proportional to that of timing gear 16, the same number of first signals 71 would be generated for each full engine revolution as in the described embodiment.

## Claims

1. A fuel pump control system for an internal combustion engine (10) which includes an engine driven crankshaft (11); a first gear (14) fixed to a first shaft (16); a second gear (13) fixed to the crankshaft (11) and meshed with the first gear (14); and a fuel pump (21) for delivering fuel to the engine; the control system including timing means (18) for rotatably driving a second shaft (19) from the first shaft (16), the second shaft (19) driving the fuel pump (21), and for varying the angular relationship between the shafts (16, 19), one or more first sensible members (47) rotatable at a speed proportional to the speed of the first shaft (16) and movable through a first circular path; a non-contacting digital type first signal generator means (48) for generating a first signal (71) in response to movement of the or each first sensible member (47) past a first predetermined point (49) in the first circular path; one or more second sensible members (53) rotatable at a speed proportional to the speed of the second shaft (19) and movable through a second circular path; a second non-contacting digital type signal generator means (51) for generating a second signal (72) in response to movement of the or each second sensible member (53) past a second predetermined point (59) in the second circular path; clock means (76) for generating a series of clock pulses; counting means (78, 79) for counting the number of clock pulses occurring in the interval beginning with a signal (72) from one (51) of the signal generator means (48, 51) and ending with the next succeeding signal (71) from the other (48) of the signal generator means, the counting means (78, 79) providing a digital signal proportional to the magnitude of the timing advance angle; characterized by a third shaft (41) movable through a limited range of movement to control the amount of fuel flow through the fuel pump; a third non-contacting digital type signal generator means (61) for generating a third signal (73) in response to movement of the second sensible member (53) past a determinable point (68) in the second circular path; means (64, 66, 67) for shifting the determinable point (68) around the second circular path in response to, and through a distance proportional to, movement of the third shaft (41); and counting means (82, 83) for counting the number of clock pulses occurring in the interval beginning with a signal (72) from the second non-contacting digital type signal generator means (51) and ending with the next succeeding signal (73) from the third non-contacting digital type signal generator means (61), the counting means (82, 83) providing a digital signal proportional to the amount that the fuel rack (41) has been shifted.

2. A system according to claim 1, wherein the clock means (76) generates clock pulses at a frequency proportional to the speed of one (16) of the shafts.

3. A system according to claim 1 or claim 2, including a first member (14) fixed to and extending outwardly from the first shaft (16) and a second member (52) fixed to and extending outwardly from the second shaft (19), the or each first sensible member (47) being located on the first fixed member (14) and the or each second sensible member (53) being located on the second fixed member (52).

4. A system according to claim 3, including a plurality of first sensible members (47) located on the first member (14) and spaced equi-angularly around the first member (14), and a plurality of second sensible members (53) located on the second member (52) and spaced equi-angularly around the second member (52).

5. A system according to claim 3 or claim 4, wherein the first and second members (14, 52) are of ferromagnetic material, first and second sensible members (47, 53) are irregularities in the first and second members (14, 52) respectively and the first and second non-contacting digital type signal generator means (48, 51) each include a magnetic sensor (49, 57) located adjacent the respective paths of movement of the first and second sensible members (47, 53).

6. A system according to claim 5, wherein the first and second sensible members (47, 53) are ferromagnetic surface discontinuities.

7. A system according to any of claims 1 to 6, wherein the counting means (78, 79) includes a pulse counter (79) and a gate (78) connected between the clock means (76) and the pulse counter (79), the gate (78) being closed in response to receiving a signal (72) from one (51) of the non-contacting digital type signal generator means (48, 51) and being opened in response to receiving a signal (71) from the other (48) of the non-contacting digital type signal generator means (48, 51).

8. A system according to any of claims 1 to 7, wherein the clock means (76) generates clock pulses at a frequency proportional to the speed of the first shaft (16).

**Patentansprüche**

1. Brennstoffpumpen-Steuersystem für einen Verbrennungsmotor (10), der eine vom Motor angetriebene Kurbelwelle (11) aufweist; ein erstes Zahnrad (14), befestigt an der ersten Welle (16); ein zweites Zahnrad (13), befestigt an der Kurbelwelle (11) und in Eingriff stehend mit dem ersten Zahnrad (14); und eine Brennstoffpumpe (21) zur Lieferung von Brennstoff an den Motor; wobei das Steuersystem Zeitsteuermittel (18) aufweist zum Drehantrieb einer zweiten Welle (19) von der ersten Welle (16), wobei die zweite Welle (19) die Brennstoffpumpe (21) antreibt, und zur Veränderung der Winkelbeziehung zwischen den Wellen (16, 19), wobei eines oder mehrere erste empfindliche Glieder (47), drehbar mit einer Drehzahl oder Geschwindigkeit proportional zur Drehzahl der ersten Welle (16) und durch eine erste Kreisbahn beweglich sind; nicht kontaktierende erste Signalgeneratormittel (48) der Digital-Bauart zur Erzeugung eines ersten Signals (71) infolge der Bewegung des oder jedes der ersten empfindlichen Gliedes (47) bzw. Glieder (47) an einem ersten vorbestimmten Punkt (49) in der ersten Kreisbahn vorbei; eines oder mehrere zweite empfindliche Glieder (53), drehbar mit einer Drehzahl proportional zur Drehzahl der zweiten Welle (19) und beweglich durch eine zweite Kreisbahn; zweite nicht kontaktierende Signalgeneratormittel (51) der Digital-Bauart zur Erzeugung eines zweiten Signals (72) infolge der Bewegung des oder jedes zweiten empfindlichen Glieds (53) an einem zweiten vorbestimmten Punkt (59) in der zweiten Kreisbahn vorbei; Taktmittel (76) zur Erzeugung einer Reihe von Taktimpulsen; Zählmittel (78, 79) zum Zählen der Anzahl der Taktimpulse, die in einem Intervall auftreten, welches mit einem Signal (72) von einem (51) der Signalgeneratormittel (48, 51) beginnt und welches mit dem nächstdarauffolgenden Signal (71) von dem anderen (48) der Signalgeneratormittel endet, wobei die Zählmittel (78, 79) ein Digitalsignal proportional zur Größe des Zeitsteuervoreilwinkels erzeugen; gekennzeichnet durch eine dritte Welle (41), die durch einen begrenzten Bewegungsbereich bewegbar ist, um die Größe des Brennstoffflusses durch die Brennstoffpumpe zu steuern; dritte nicht kontaktierende Signalgeneratormittel (61) der Digital-Bauart zur Erzeugung eine dritten Signals (73) infolge der Bewegung des zweiten empfindlichen Glieds (53) an einen vorbestimmbaren Punkt (68) in der zweiten Kreisbahn vorbei; Mittel (64, 66, 67) zur Verschiebung des vorbestimmbaren Punktes (68) um die zweite Kreisbahn herum und zwar in Folge und über einen Abstand proportional zur Bewegung der dritten Welle (41); und Zählmittel (82, 83) zum Zählen der Anzahl der Taktimpulse, die in dem Intervall beginnen, welches mit einem Signal (72) von den zweiten nicht kontaktierenden Signalgeneratormitteln (51) der Digital-Bauart beginnt und mit dem nächstdarauffolgenden Signal (73) von den dritten nicht kontaktierenden Signalgeneratormitteln (61) der digitalen Bauart endet, und wobei die Zählmittel (82, 83) ein Digitalsignal proportional zu der Größe erzeugen, um welche die Brennstoffzahnstange (41) verschoben wurde.

2. System nach Anspruch 1, wobei die Taktmittel (76) Taktimpulse mit einer Frequenz proportional zur Drehzahl einer (16) der Wellen erzeugen.

3. System nach Anspruch 1 oder 2 mit einem ersten Glied (14), befestigt an und sich nach außen erstreckend von der ersten Welle (16), und mit einem zweiten Glied (52), befestigt an und sich nach außen erstreckend von der zweiten Welle (19), wobei das oder jedes erste empfindliche Glied (47) an dem ersten befestigten Glied (14) angeordnet ist und wobei das oder jedes zweite empfindliche Glied (53) an dem zweiten befestigten Glied (52) befestigt ist.

4. System nach Anspruch 3 mit einer Vielzahl von ersten empfindlichen Gliedern (47), angeordnet am ersten Glied (14) und mit gleichwinkligem Abstand um das erste Glied (14) herum angeordnet, und ferner mit einer Vielzahl von zweiten empfindlichen Gliedern (53), angeordnet am zweiten Glied (52) und gleichwinklig mit Abstand angeordnet um das zweite Glied (52).

5. System nach Anspruch 3 oder 4, wobei die ersten und zweiten Glieder (14, 52) aus ferromagnetischem Material bestehen, wobei die ersten und zweiten empfindlichen Glieder (47, 53) Unregelmäßigkeiten in den ersten bzw. zweiten Gliedern (14, 52) sind, und wobei die ersten und zweiten nicht kontaktierenden Signalgeneratormittel (48, 51) der Digital-Bauart jeweils einen magnetischen Sensor (Fühler) (49, 57) aufweisen, und zwar angeordnet benachbart zu den entsprechenden Bewegungsbahnen und der ersten und zweiten empfindlichen Glieder (47, 53).

6. System nach Anspruch 5, wobei die ersten und zweiten empfindlichen Glieder (47, 53) ferromagnetischen Oberflächen-Diskontinuitäten sind.

7. System nach einem der Ansprüche 1 bis 6, wobei die Zählmittel (78, 79) einen Impulszähler (79) und ein Gatter (78) geschaltet zwischen die Taktmittel (76) und den Impulszähler (79) aufweisen, und wobei das Gatter (78) infolge des Empfangs eines Signals (72) von einem (51) der nicht kontaktierenden Signalgeneratormittel (48, 51) der Digital-Bauart geschlossen werden, und wobei sie geöffnet werden infolge des Empfangs eines Signals (71) von den anderen (48) der nicht kontaktierenden Signalgeneratormittel (48, 51) der Digital-Bauart.

8. System nach einem der Ansprüche 1 bis 7, wobei die Taktmittel (76) Taktimpulse mit einer Frequenz proportional zur Drehzahl der ersten Welle (16) erzeugen.

## Revendications

1. Système de contrôle de la pompe à combustible d'un moteur à combustion interne (10) qui comprend un vilebrequin entraîné par le moteur (11); une première roue dentée (14) solidaire d'un premier arbre (16); une seconde roue dentée (13) solidaire du vilebrequin (11) et en prise avec la première roue dentée (14); et une pompe à combustible (21) destinée à fournir du combustible au moteur; le système de contrôle comprenant des moyens de synchronisation (18) pour entraîner un second arbre (19) en rotation depuis le premier arbre (16), le second arbre (19) entraînant la pompe à combustible (21), et pour faire varier la rélation angulaire entre les arbres (16, 19), un ou plusieurs premiers éléments sensibles (47) tournant à une vitesse proportionnelle à la vitesse du premier arbre (16) et aptes à suivre un premier trajet circulaire; un premier moyen de génération de signaux de type numérique sans contact (48) pour produire un premier signal (71) en réponse au passage du ou des premiers éléments sensibles (47) devant un premier point prédéterminé (49) du premier trajet circulaire; un ou plusieurs seconds éléments sensibles (53) tournant à une vitesse proportionnelle à la vitesse du second arbre (19) et suivant un second trajet circulaire; un second moyen de génération de signaux de type numérique sans contact (51) pour produire un second signal (72) en réponse au passage du ou des seconds éléments sensibles (53) devant un second point prédéterminé (59) du second trajet circulaire; des moyens d'horloge (76) produisant une série d'impulsions d'horloge; des moyens de comptage (78, 79) pour compter le nombre d'impulsions d'horloge intervenant dans l'intervalle commençant par un signal (72) en provenance d'un (51) des moyens de génération de signaux (48, 51) et se terminant par le prochain signal suivant (71) provenant de l'autre (48) moyen de génération de signaux, les moyens de comptage (78, 79) fournissant un signal numérique proportionnel à la grandeur de l'angle d'avance à l'allumage; caractérisé par un troisième arbre (41) mobile selon un intervalle de mouvement limité pour contrôler la quantité de combustible traversant la pompe à combustible; un troisième moyen de génération de signaux de type numérique sans contact (61) déstiné à produire un troisième signal (73) en réponse au passage du second élément sensible (53) devant un point déterminable (68) du second trajet circulaire; des moyens (64, 66, 67) permettant de déplacer le point déterminable (68) sur un second trajet circulaire en réponse et sur une distance proportionnelle au mouvement du troisième arbre (41); et des moyens de comptage (82, 83) pour compter le nombre d'impulsions d'horloge intervenant dans l'intervalle commençant par un signal (72) émis par le second moyen de génération de signaux de type numérique sans contact (51) et se terminant par le prochain signal suivant (73) provenant du troisième moyen de génération de signaux de type numérique sans contact (61), les moyens de comptage (82, 83) fournissant un signal numérique proportionnel à l'importance du déplacement de l'obturateur (41) de combustible.

2. Système selon la revendication 1, dans lequel les moyens d'horloge (76) produisent des impulsions d'horloge à une fréquence proportionnelle à la vitesse d'un (16) des arbres.

3. Système selon la revendication 1 comprenant un premier organe (14) solidaire et s'étendant vers l'extérieur du premier arbre (16) et un second organe (52) solidaire et sétendant vers l'extérieur du second arbre (19), le ou chaque premier élément sensible (47) étant situé sur le premier organe fixe (14) et le ou chaque second élement sensible (53) état situé sur le second organe fixe (52).

4. Système selon la revendication 3, comprenant une pluralité de premiers éléments sensibles (47) situés sur le premier organe (14) et espacés équiangulairement autour du premier organe (14), et une pluralité de seconds éléments sensibles (53) situées sur le second organe (52) et espacés equiangulairement autour du second organe (52).

5. Système selon la revendication 3 ou la revendication 4, dans lequel les premier et second organes (14, 52) sont en un matériau ferromagnétique, les premiers et seconds éléments sensibles (47, 53) sont des irégularités sur les premier et second organes (14, 52) respectivement et les premier et second moyens de génération de signaux de type numérique sans contact (48, 51) comprennent chacun un détecteur magnétique (49, 57) situé adjacent au trajet de déplacement respectif des premiers et seconds éléments sensibles (47, 53).

6. Système selon la revendication 5, dans lequel les premiers et seconds éléments sensibles (47, 53) sont des discontinuités de surface férromagnétiques.

7. Système selon l'une quelconque des revendications 1 à 6, dans lequel les moyens de comptage (78, 79) comprennent un compteur d'impulsions (79) et une porte (78) reliée entre les moyens d'horloge (76) et le compteur d'impulsions (79), la porte (78) étant fermée en réponse à la réception d'un signal (72) provenant d'un (51) des moyens de génération de signaux de type numérique sans contact (48, 51) et étant ouverte en réponse à la récéption d'un signal (71) provenant de l'autre (48) des moyens de génération de signaux de type numérique sans contact (48, 51).

8. Système selon l'une quelconque des revendications 1 à 7, dans lequel les moyens d'horloge (76) produisent des impulsions d'horloge à une fréquence proportionnelle à la vitesse du premier arbre (16).

FIG. 1

- DATA PROCESSOR → TIMING ADVANCE ANGLE
- DATA PROCESSOR → FUEL RACK ANGLE
- DATA PROCESSOR → FUEL CAMSHAFT SPEED

FIG. 2

FIG.3

| ENGINE ROTATION | 0° | 15° | 30° | 45° | 60° | 75° | 90° | 105° |

| FUEL CAM SHAFT ROT. | 0° | 7.5° | 15° | 22.5° | 30° | 37.5° | 45° | 52.5° |

0 059 587

# FIG.4

```
  ┌─────────┐
  │  GEAR   │ 49
  │ SENSOR  │
  └────┬────┘
       │
  ┌────▼──────┐
  │ DETERMINE │
  │T FREQUENCY│
  └────┬──────┘
       │  77
       │  76
  ┌────▼──────┐
  │  CLOCK    │
  │ N TIMES   │
  │ .T FREQ.  │
  └───────────┘

  ┌─────────┐
  │  DRUM   │
  │ SENSOR  │  62
  └─────────┘
```

**78** OFF $t_1$ GATE ON

**57** DRUM SENSOR

**82** ON $t_2$ GATE OFF

**70**

**79** COUNT CLOCK PULSES DURING $t_1$

**81** $t_1$ COUNT ≈ TO TIMING ADVANCE ANGLE

**83** COUNT CLOCK PULSES DURING $t_2$

**84** $t_2$ COUNT ≈ TO FUEL RACK ANGLE

**86** DETERMINE $T_1$ FREQUENCY

**87** $T_1$ FREQ. ≈ TO FUEL CAMSHAFT SPEED (RPM)